# EUROPÄISCHE PATENTSCHRIFT

(11) **EP 2 620 579 B1**
(45) Veröffentlichungstag und Bekanntmachung des Hinweises auf die Patenterteilung: **05.07.2017**
(21) Anmeldenummer: 12195772.4
(22) Anmeldetag: 06.12.2012
(51) Int. Cl.: E06B 1/60, F16B 7/04, E06B 3/22, E06B 1/68, E06B 1/28

(54) **Verbindungselement zur Verbindung von Profilteilen**
Connection element for connecting profile sections
Elément de liaison destiné à la liaison de pièces profilées

(30) Priorität: 27.01.2012 DE 102012201198
(43) Veröffentlichungstag der Anmeldung: 31.07.2013
(73) Patentinhaber: aluplast GmbH, 76227 Karlsruhe (DE)
(72) Erfinder: Bender, Arno, 76227 Karlsruhe (DE); Huber, Jürgen, 76474 Au am Rhein (DE)
(74) Vertreter: Lemcke, Brommer & Partner Patentanwälte Partnerschaft mbB

(56) Entgegenhaltungen:
- EP-A1- 1 069 272
- FR-A5- 2 120 440
- GB-A- 2 300 019
- US-A1- 2002 078 640

## Beschreibung

Die Erfindung betrifft ein Verbindungselement nach dem Oberbegriff des Anspruchs 1 zum Verbinden eines ersten Profilteils, vorzugsweise eines Rahmenprofils für ein Fenster oder eine Tür, mit einem zweiten Profilteil, vorzugsweise einem Anbauprofil oder Adapterprofil, welches erste Profilteil an einer Verbindungsseite wenigstens zwei Rastvorsprünge mit Hinterschneidungen aufweist, wobei das Verbindungselement eine im Querschnitt im Wesentlichen U-förmige Ausgestaltung mit wenigstens einem ersten freien Schenkel und mit wenigstens einem zweiten freien Schenkel und mit einem den ersten Schenkel und den zweiten Schenkel verbindenden mittleren Schenkel aufweist, wobei der erste freie Schenkel sich im Wesentlichen senkrecht zu dem mittleren Schenkel erstreckt und in wenigstens einem Tiefenabschnitt eine zu der dem zweiten freien Schenkel abgewandten Seite hervorragende Haltestruktur aufweist, welche Haltestruktur sich vorzugsweise rechtwinklig zu dem ersten Schenkel erstreckt. In einem weiteren Aspekt betrifft die Erfindung eine Verbindungsanordnung gemäß Anspruchs 9 mit einem ersten Profilteil, vorzugsweise Rahmenprofil für ein Fenster oder eine Tür, und mit einem zweiten Profilteil, vorzugsweise Anbauprofil oder Adapterprofil, welches erste Profilteil an einer Verbindungsseite wenigstens zwei Rastvorsprünge aufweist, wobei die Verbindungsanordnung ein erfindungsgemäßes Verbindungselement umfasst. Außerdem betrifft die vorliegende Erfindung ein Verfahren nach dem Oberbegriff des Anspruchs 14 zum Verbinden eines ersten Profilteils, vorzugsweise Rahmenprofil für ein Fenster oder eine Tür, mit einem zweiten Profilteil, vorzugsweise Anbauprofil oder Adapterprofil, welches erste Profilteil an einer Verbindungsseite wenigstens zwei Rastvorsprünge aufweist und welches zweite Profilteil seinerseits an einer Verbindungsseite wenigstens zwei Rastvorsprünge aufweist, wobei die Rastvorsprünge des ersten Profilteils und die Rastvorsprünge des zweiten Profilteils jedoch nicht paarweise korrespondierend ausgebildet sind.
Aus dem Stand der Technik ist es bekannt, Profilteile, insbesondere Rahmenprofile zur Herstellung von Fenster- oder Türflügeln und hiermit zusammenwirkende Adapter- oder Anbauprofile, durch Verrastung miteinander zu verbinden. Hierzu müssen die zu verbindenen Profilteile paarweise korrespondierende Rastvorsprünge aufweisen. Es ist folglich nur möglich, aufeinander abgestimmte Profilteile zu verbinden. Hierdurch ist die Flexibilität der Verwendung vorhandener Profilteile auf bestimmte Kombinationen eingeschränkt.

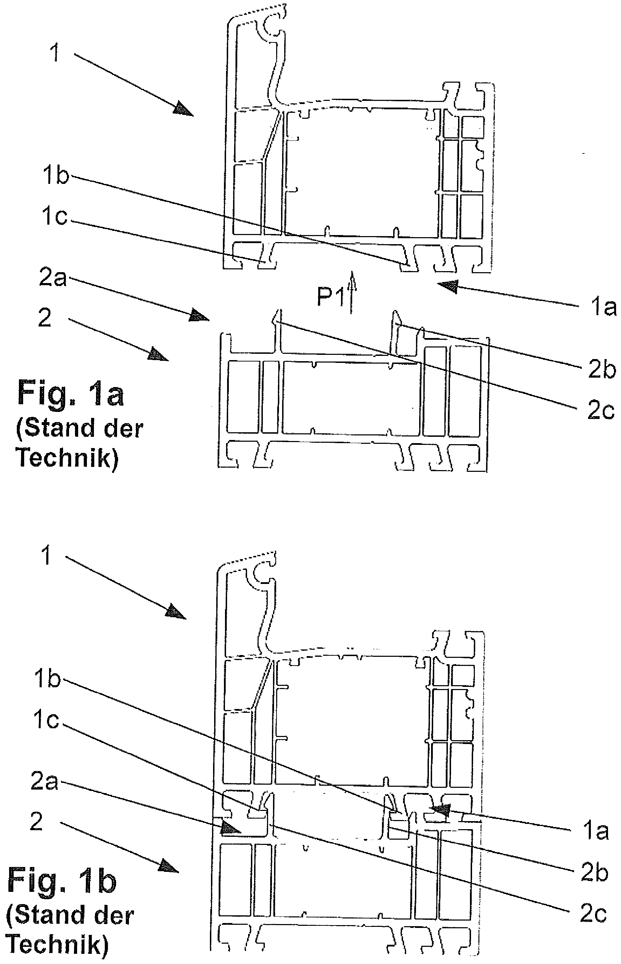

Die Figuren 1 a und 1 b zeigen die Verbindung eines Adapter- bzw. Zusatzprofils mit einem Kunststoff-Fensterrahmenprofil nach dem Stand der Technik. Das zuletzt genannte Fensterrahmenprofil ist in den Figuren 1 a und 1 b mit den Bezugszeichen 1 bezeichnet. Das genannte Adapter- bzw. Zusatzprofil trägt das Bezugszeichen 2. Beide Profilteile 1, 2 weisen an ihren einander zugekehrten Verbindungsseiten 1 a bzw. 2a eine Reihe von Rastvorsprüngen 1 b, 1 c bzw. 2b, 2c auf, von denen in Figur 1a und 1b nur einige explizit bezeichnet sind, welche für die angestrebte Verrastung maßgeblich sind. Gemäß Figur 1a wird das untere Profilteil 2 in Richtung des Pfeils P1 auf das andere Profilteil 1 aufgerastet. Hierbei erfolgt eine paarweise Verrastung im Bereich der Rastvorsprünge 1 b, 2b bzw. 1 c, 2c, wie in Figur 1b dargestellt. Hierdurch ergibt sich in der Regel ein sicherer Halt der Profilteile 1, 2 aneinander an einer gewünschten Position, in der Regel ohne Spaltbildung.
Wie bereits angesprochen, hat sich hierbei als nachteilig herausgestellt, dass die Verbindung von Profilen, welche keine geeigneten komplementären Rastvorsprünge aufweisen, nicht möglich ist. Mit anderen Worten: Nach dem Stand der Technik können Profilteile, welche nicht von vornherein für bestimmte Verbindungen miteinander hergestellt wurden, nicht in der bekannten Weise durch das vorstehend beschriebene Aufrasten miteinander verbunden werden.
In der EP 1 069 272 A1 ist ein teilbares Aluminiumprofil offenbart, welches Teil einer Eingangstür oder eines Fensterrahmens ist, und zur Anpassung und Stabilisierung einer Glasscheibe oder dergleichen eingesetzt werden kann.
Die GB 2 300 019 zeigt einen Grundrahmen zur Montage eines Fenster- oder Türrahmens in einem Gebäudeteil.

Die FR 2 120 440 A5 offenbart ein Verbindungselement für Profile gemäß dem Oberbegriff des Anspruchs 1, sowie ein Verfahren zum Verbinden von Profilteilen gemäß dem Oberbegriff des Anspruchs 14.

Der Erfindung liegt die Aufgabe zugrunde, eine Verbindungsmöglichkeit zwischen Profilteilen zu schaffen, die eine Verrastung der Profilteile aneinander auch dann ermöglicht, wenn an den Profilteilen selbst nicht die erforderlichen paarweise zusammenwirkenden Rastvorsprünge in der richtigen Position vorhanden sind.

Die Erfindung löst diese Aufgabe mittels eines Verbindungselements mit den Merkmalen des Anspruchs 1 sowie mittels eines Verfahrens mit den Merkmalen des Anspruchs 14. Vorteilhafte Weiterbildungen der Erfindungsgegenstände sind jeweils Gegenstand von Unteransprüchen, deren Wortlaut hiermit durch ausdrückliche Bezugnahme in die Beschreibung aufgenommen wird, um Textwiederholungen zu vermeiden.
Erfindungsgemäß ist ein Verbindungselement zum Verbinden eines ersten Profilteils, vorzugsweise eines Rahmenprofils für ein Fenster oder eine Tür, mit einem zweiten Profilteil, vorzugsweise einem Anbauprofil oder Adapterprofil, welches erste Profilteil an einer Verbindungsseite wenigstens zwei Rastvorsprünge aufweist, bei das Verbindungsprofil eine im Querschnitt im Wesentlichen U-förmige Ausgestaltung mit wenigstens einem ersten freien Schenkel und mit wenigstens einem zweiten freien Schenkel und mit einem den ersten Schenkel und den zweiten Schenkel verbindenden mittleren Schenkel aufweist, wobei der erste freie Schenkel sich im Wesentlichen senkrecht zu dem mittleren Schenkel erstreckt und in wenigstens einem Tiefenabschnitt eine zu der dem zweiten freien Schenkel abgewandten Seite hervorragende Haltestruktur aufweist, welche Haltestruktur sich vorzugsweise rechtwinklig zu dem ersten Schenkel erstreckt, dadurch gekennzeichnet, dass der zweite Schenkel unter einem leicht stumpfen Winkel bezüglich des mittleren Schenkels zu der dem ersten freien Schenkel abgewandten Seite abgebogen ist, vorzugsweise mit einer endlichen Krümmung im Abbiegebereich, wobei der zweite Schenkel dazu ausgebildet und vorgesehen ist, bei einem Eindrücken des Verbindungselements in einen freien Bereich zwischen den Rastvorsprüngen des ersten Profilteils eine Federwirkung auf die Rastvorsprünge zu bewirken, um das Verbindungselement mittels der Haltestruktur und des zweiten freien Schenkels durch Einklipsen in die Hinterschneidungen an den Rastvorsprüngen des ersten Profilteils zu befestigen, wobei im Bereich des mittleren Schenkels wenigstens ein sich im Wesentlichen parallel zu dem ersten und dem zweiten freien Schenkel erstreckender Rastvorsprung angeordnet ist, der für ein Verrasten mit einem komplementären Rastvorsprung des zweiten Profilteils vorgesehen ist, um das erste Profilteil und das zweite Profilteil zu verbinden.

Erfindungsgemäß ist in einem weiteren Aspekt der Erfindung eine Verbindungsanordnung mit einem ersten Profilteil, vorzugsweise Rahmenprofil für ein Fenster oder eine Tür, und mit einem zweiten Profilteil, vorzugsweise Anbauprofil, welches erste Profilteil an einer Verbindungsseite wenigstens zwei Rastvorsprünge aufweist, dadurch gekennzeichnet, dass an den Rastvorsprüngen ein erfindungsgemäßes Verbindungselement mit seiner Haltestruktur einerseits und mit seinem zweiten freien Schenkel andererseits befestigt ist, vorzugsweise formschlüssig durch Hintergreifen der Rastvorsprünge, und das zweite Profilteil seinerseits an einer Verbindungsseite wenigstens zwei Rastvorsprünge aufweist, von welchen Rastvorsprüngen wenigstens einer mit einem Rastvorsprung des Verbindungselements rastend zusammenwirkt und von welchen Rastvorsprüngen der andere rastend mit einem Rastvorsprung des Verbindungselements oder mit einem Rastvorsprung des ersten Profilteils zusammenwirkt, um das erste Profilteil über das Verbindungselement mit dem zweiten Profilteil zu verbinden.

Erfindungsgemäß ist ein Verfahren zum Verbinden eines ersten Profilteils, vorzugsweise Rahmenprofil für ein Fenster oder eine Tür, mit einem zweiten Profilteil, vorzugsweise Anbauprofil, welches erste Profilteil an einer Verbindungsseite wenigstens zwei Rastvorsprünge aufweist und welches zweite Profilteil seinerseits an einer Verbindungsseite wenigstens zwei Rastvorsprünge aufweist, wobei vorzugsweise die Rastvorsprünge des ersten Profilteils und die Rastvorsprünge des zweiten Profilteils nicht paarweise korrespondierend ausgebildet sind, dadurch gekennzeichnet, dass an den Rastvorsprüngen des ersten Profilteils ein erfindungsgemäßes Verbindungselement befestigt wird, höchst vorzugsweise mittels seiner Haltestruktur einerseits und seines zweiten freien Schenkels andererseits, und dass das zweite Profilteil mit wenigstens einem seiner Rastvorsprünge mit dem Verbindungselement und mit seinem anderen Rastvorsprung mit einem Rastvorsprung des Verbindungselements oder mit einem Rastvorsprung des ersten Profilteils verrastet wird, um das erste Profilteil über das Verbindungselement mit dem zweiten Profilteil zu verbinden.

Die Verwendung des erfindungsgemäßen Verbindungselements ermöglicht es, auch solche Profilteile miteinander zu verbinden, die ansonsten nicht über die notwendige Anzahl geeignet positionierter paarweise komplementärer Rastvorsprünge verfügen. Erfindungsgemäß schafft das Verbindungselement an dem ersten Profilteil zumindest einen weiteren Rastvorsprung, der für die gewünschte Aufrastung des zweiten Profilteils nutzbar ist. Durch die somit mögliche Schaffung von zusätzlichen Rastpositionen durch das erfindungsgemäße Verbindungselement können Profilteile, welche nicht für eine bestimmte Rastverbindung miteinander vorgesehen waren, mit einer solchen Funktion ausgestattet werden. Auf diese Weise lassen sich insbesondere Werkzeugänderungskosten einsparen, da eine Herstellung angepasster neuer Profilteile nicht mehr notwendig ist. Des Weiteren lassen sich bei Verwendung eines erfindungsgemäßen Verbindungselements zukünftig Profilteile einsetzen, die in materialsparender und damit kostengünstiger Art und Weise nur noch eine verringerte Anzahl von Rastvorsprüngen aufweisen.

Das erfindungsgemäße Verbindungselement lässt sich aufgrund seiner weiter unten noch genauer zu beschreibenden Ausgestaltung vorteilhafterweise im Bereich vorhandener Hintergreifungen im Bereich von Rastvorsprüngen des ersten Profilteils durch Einklipsen an dem ersten Profilteil befestigen. Es wird daher im Rahmen der vorliegenden Beschreibung auch als (Auf-)Klipsadapter oder Klipsklammer bezeichnet.

Im Zuge einer besonders bevorzugten Ausgestaltung des erfindungsgemäßen Verbindungselements ist das Verbindungselement als Stanz-/Biegeteil oder (Spritz-)Gussteil in einem metallischen Werkstoff ausgebildet. Abweichend hiervon kann das Verbindungselement jedoch auch als (Spritz-)Gussteil in einem nichtmetallischen Werkstoff ausgebildet sein. Grundsätzlich ist insbesondere die Verwendung von Kunststoff zur Herstellung eines erfindungsemäßen Verbindungselements möglich, weiches dementsprechend als Kunststoff-Spritzgußteil ausgebildet sein kann.

Eine bevorzugte Verwendung findet das erfindungsgemäße Verbindungselement im Bereich von Rahmenprofilen für Kunststoff-Fenster oder -türen. Allerdings ist das Verbindungselement in seiner Verwendung keinesfalls auf einen derartigen Einsatzzweck beschränkt, sondern kann zur Verbindung quasi beliebiger Profilteile verwendet werden, welche ihrerseits in beliebigen Werkstoffen ausgebildet sein können, beispielsweise Aluminium.

Wie bereits erwähnt wurde, besitzt ein erfindungsgemäßes Verbindungselement im Querschnitt eine im Wesentlichen U-förmige Ausgestaltung. Dies impliziert das Vorhandensein eines ersten und eines zweiten freien Schenkels, zwischen denen ein mittlerer Verbindungsschenkel angeordnet ist. Bei dem erfindungsgemäßen Verbindungselement erstreckt sich der erste freie Schenkel im Wesentlichen senkrecht zu dem mittleren Schenkel und besitzt eine Haltestruktur, welche auf der dem zweiten freien Schenkel abgewandten Seite des ersten freien Schenkels, d.h. nach außen hervorragt. Der zweite freie Schenkel dagegen erstreckt sich unter einem leicht stumpfen Winkel bezüglich des mittleren Schenkels nach außen, d.h. zu der dem ersten freien Schenkel abgewandten Seite des Verbindungselements. Die U-Form ist also auf der Seite des zweiten freien Schenkels leicht aufgebogen.

Quer zu dem mittleren Schenkel kann der erste freie Schenkel außerdem eine Erstreckung aufweisen, die größer ist als eine entsprechende Erstreckungskomponente des zweiten freien Schenkels. Mit anderen Worten: die U-Form ist auf Seiten des ersten freien Schenkels höher als auf Seiten des zweiten freien Schenkels, was gewisse Vorteile ergibt, auf die weiter unten noch näher eingegangen wird.

Um das Verbindungselement mit in der Haltestruktur und dem zweiten freien Schenkel an den Rastvorsprüngen des ersten Profilteils zu befestigen, wird das Verbindungselement einfach in einen freien Bereich zwischen den genannten Rastvorsprüngen des ersten Profilteils eingedrückt (eingeklipst). Derartige Rastvorsprünge weisen regelmäßig Hinterschneidungen auf, in die das Verbindungselement einerseits mit der nach außen vorragenden Haltestruktur und andererseits mit dem freien Ende des zweiten freien Schenkels eingreift. Die genannte stumpfwinklige Erstreckung des zweiten freien Schenkels bezüglich des mittleren Schenkels ermöglichen in diesem Bereich eine gewisse Federwirkung beim Eindrücken in den genannten Bereich zwischen den Rastvorsprüngen des ersten Profilteils. Hierdurch wird das genannte Einklipsen in den Bereich zwischen den Rastvorsprüngen einerseits überhaupt erst ermöglicht, andererseits ergibt sich so nach erfolgtem Einklipsen ein sicherer formschlüssiger Halt des Verbindungselements an dem ersten Profilteil.

Erfindungsgemäß ist nun weiterhin vorgesehen, dass im Bereich des mittleren Schenkels wenigstens ein sich im Wesentlichen parallel zu dem ersten und dem zweiten Schenkel erstreckender Rastvorsprung an dem Verbindungselement ausgebildet ist. Dieser zusätzliche Rastvorsprung kann anschließend für ein Verrasten mit einem komplementären Rastvorsprung des zweiten Profilteils verwendet werden, wodurch sich der bereits angesprochene Nutzen des erfindungsgemäßen Verbindungselements ergibt, welches zusätzliche Rastvorsprünge an dem ersten Profilteil bereitstellen kann, um das erste Profilteil und das zweite Profilteil zu verbinden.

Erfindungsgemäß ist vorgesehen, dass die bereits angesprochene Haltestruktur an dem ersten freien Schenkel sich über wenigstens einen Tiefenabschnitt des Verbindungselements erstreckt, wobei die Tiefe vorliegend insbesondere in Profillängsrichtung orientiert ist. Dies kann im Zuge einer bevorzugten Weiterbildung des erfindungsgemäßen Verbindungselements dadurch erreicht werden, dass die Haltestruktur durch Umbiegen des ersten freien Schenkels in einem Tiefenabschnitt hergestellt ist. Ein Maß für diesen Tiefenabschnitt liegt vorzugsweise im Bereich von 10 bis 25% der Gesamttiefe des Verbindungselements, höchst vorzugsweise etwa 20% der Gesamttiefe. Vorzugsweise weist das Verbindungselement zwei derartige Haltestrukturen auf, welche in den beiden randständigen Tiefenabschnitten des Verbindungselements angeordnet sind. Abgesehen von den beschriebenen Haltestrukturen weist der erste freie Schenkel des Verbindungselements ansonsten die bereits angesprochene Erstreckung quer zum mittleren Abschnitt des Verbindungselements auf.

Analog kann im Zuge einer anderen Weiterbildung des erfindungsgemäßen Verbindungselements der Rastvorsprung durch Umbiegen des mittleren Schenkels in einem Tiefenabschnitt hergestellt sein. Auf diese Weise können leicht auch mehrere, in der Tiefe hintereinander liegende Rastvorsprünge geschaffen werden. Vorzugsweise sind diese mehreren Rastvorsprünge bei unterschiedlichen Positionen bezogen auf den mittleren Schenkel ausgebildet, d.h. quer zur Profillängsrichtung, um auf diese Weise eine Mehrzahl unterschiedlicher Aufrastpositionen für das zweite Profilteil zu schaffen.

Im Zuge einer wieder anderen Weiterbildung des erfindungsgemäßen Verbindungselements kann vorgesehen sein, dass der oder die Rastvorsprünge in einem etwa mittleren Tiefenabschnitt des Verbindungselements angeordnet ist bzw. sind. Dabei kann weiterhin vorgesehen sein, dass die Tiefe eines Rastvorsprungs etwa 25 bis 40%, vorzugsweise etwa ein Drittel der Gesamttiefe des Verbindungselements ausmacht. Besonders bevorzugt ist in diesem Zusammenhang eine Ausgestaltung, bei der auf eine erste randständige Haltestruktur, die etwa ein Sechstel der Gesamttiefe des Verbindungselements ausmacht, in der Tiefenrichtung zwei verschiedene Rastvorsprünge mit jeweils etwa einem Drittel der Gesamttiefe folgen, woran sich eine weitere randständige Haltestruktur über wiederum ein Sechstel der Gesamttiefe anschließt. Eine derartige Ausgestaltung wird weiter unten unter Bezugnahme auf die Zeichnung noch genauer erläutert.

Um die Flexibilität der Verbindung mit einem zweiten Profilteil zu erhöhen, sieht eine andere Weiterbildung des erfindungsgemäßen Verbindungselements vor, dass an wenigstens zwei Rastvorsprüngen des Verbindungselements vorgesehene Raststrukturen (Rastnasen) einander zugewandt oder voneinander abgewandt oder in eine gleiche Richtung gewandt sind. Im erstgenannten Fall können die genannten zwei Rastvorsprünge des Verbindungselements die Rastvorsprünge eines zweiten Profilteils seitlich umgreifen. Im zweitgenannten Fall liegt gerade der umgekehrte Sachverhalt vor, d.h. das zweite Profilteil umgreift die Rastvorsprünge des Verbindungselements seitlich. In dem zuletzt genannten Fall ist eine zusätzliche Verrastung oder zumindest Abstützung an dem ersten Profilteil und/oder dem Verbindungselement vorzusehen.

Im Zuge einer wieder anderen Weiterbildung des erfindungsgemäßen Verbindungselements kann vorgesehen sein, dass dessen mittlerer Schenkel im Wesentlichen eben ausgebildet ist und vorzugsweise in einem etwa mittleren Tiefenabschnitt wenigstens einen Durchbruch zur Aufnahme eines Befestigungsmittels, vorzugsweise einer Schraube, aufweist. Über den genannten Durchbruch lässt sich das Verbindungselement zusätzlich zu der bereits angesprochenen Klipsverbindung mittels wenigstens eines zusätzlichen Befestigungsmittels, vorzugsweise Schraube, sicher an dem ersten Profilteil fixieren.

Eine erste Weiterbildung der erfindungsgemäßen Verbindungsanordnung sieht vor, dass die Rastvorsprünge an dem ersten Profilteil einander zugewandte Raststrukturen aufweisen, deren lichter Abstand von einer im Wesentlichen ebenen Unterseite des ersten Profilteils einerseits etwa einem Abstand der Haltestruktur von dem mittleren Schenkel des Verbindungselements und andererseits etwa einem Abstand des freien Endes des zweiten freien Schenkels des Verbindungselements von dem mittleren Schenkel des Verbindungselements entspricht, vorzugsweise dass ein maximaler lichter Abstand zwischen den Rastvorsprüngen an dem ersten Profilteil etwa einer Gesamtabmessung des Verbindungselements von einem freien Ende der Haltestruktur bis zu dem freien Ende des zweiten freien Schenkels entspricht, höchst vorzugsweise dass der maximale lichte Abstand etwas kleiner ist als diese Gesamtabmessung, um das Verbindungselement mit Vorspannung an dem ersten Profilteil zu fixieren. Wenn der maximale lichte Abstand etwas kleiner ist als die Gesamtabmessung des Verbindungselements, lässt sich dieses mit einer gewissen Vorspannung an dem ersten Profilteil fixieren, so dass unter Umständen auf weitere Fixierungsmaßnahmen, beispielsweise Verschrauben oder dergleichen, gänzlich verzichtet werden kann. Auf diese Weise resultiert eine besonders einfache Handhabbarkeit des erfindungsgemäßen Verbindungselements zur Schaffung einer erfindungsgemäßen Verbindungsanordnung.

Wenn gemäß einer anderen Weiterbildung der erfindungsgemäßen Verbindungsanordnung vorgesehen ist, dass eine maximale Erstreckung des Rastvorsprungs und/oder des ersten freien Schenkels des Verbindungselements quer zu dem mittleren Schenkel etwa einer maximalen Vorkragung der Rastvorsprünge des ersten Profilteils bezogen auf dessen Grundkörper entspricht, ergibt sich nach Anbringung des Verbindungselements an dem ersten Profilteil eine durch die Rastvorsprünge des ersten Profilteils und das Verbindungselement definierte gemeinsame gedachte Ebene an der Verbindungsseite des ersten Profilteils, welche in besonders einfacher Weise dazu geeignet ist, mit entsprechenden ebenen Anlageflächen an der Verbindungsseite des zweiten Profilteils stützend in Anlage zu treten.

Mit Blick auf das Verbindungselement kann weiterhin vorgesehen sein, dass eine Erstreckungskomponente des ersten freien Schenkels quer zu dem mittleren Schenkel gegenüber einer entsprechenden Erstreckungskomponente des zweiten freien Schenkels ein Übermaß aufweist. Insbesondere lässt sich in diesem Zusammenhang eine Erfindungsanordnung schaffen, bei der das zweite Profilteil an seiner Verbindungsseite an dem freien Ende des ersten Schenkels anliegt. Der erste freie Schenkel des Verbindungsteils sorgt so für eine verbesserte Abstützung des zweiten Profilteils und trägt zu einer Erhöhung der Verbindungssicherheit bei.

Wie bereits angesprochen wurde, sieht eine andere Weiterbildung der erfindungsgemäßen Verbindungsanordnung vor, dass das zweite Profilteil mit seinen Rastvorsprüngen zwischen zwei Rastvorsprünge des Verbindungselements greift. Eine wieder andere Weiterbildung der erfindungsgemäßen Verbindungsanordnung sieht dagegen vor, dass das zweite Profilteil mit seinen Rastvorsprüngen zwei Rastvorsprünge des Verbindungselements umgreift.

Weitere Eigenschaften und Vorteile der vorliegenden Erfindung ergeben sich aus der nachfolgenden Beschreibung von Ausführungsbeispielen anhand der Zeichnung.
- Figur 1a: zeigt ein erstes Profilteil und ein mit dem ersten Profilteil zu verbindendes zweites Profilteil nach dem Stand der Technik;
- Figur 1b: zeigt das erste Profilteil und das zweite Profilteil aus Figur 1a im verbundenen Zustand;
- Figur 2: zeigt eine erste Ausgestaltung des erfindungsgemäßen Verbindungselements in perspektivischer Gesamtdarstellung;
- Figur 3: zeigt im Querschnitt das Verbindungselement aus Figur 2 zusammen mit einem ersten Profilteil, bei dem das Verbindungselement verwendet werden soll;
- Figur 4a: zeigt einen ersten Zustand beim Verbinden des ersten Profilteils aus Figur 3 mit einem zweiten Profilteil unter Verwendung eines erfindungsgemäßen Verbindungselements;
- Figur 4b: zeigt einen zweiten Zustand des Verbindungsvorgangs gemäß Figur 4a, wodurch eine erfindungsgemäße Verbindungsanordnung geschaffen wurde; und
- Figuren 5a-c: zeigen die Schaffung einer erfindungsgemäßen Verbindungsanordnung zwischen einem alternativen ersten und einem alternativen zweiten Profilteil unter Verwendung eines weiteren erfindungsgemäßen Verbindungselements.

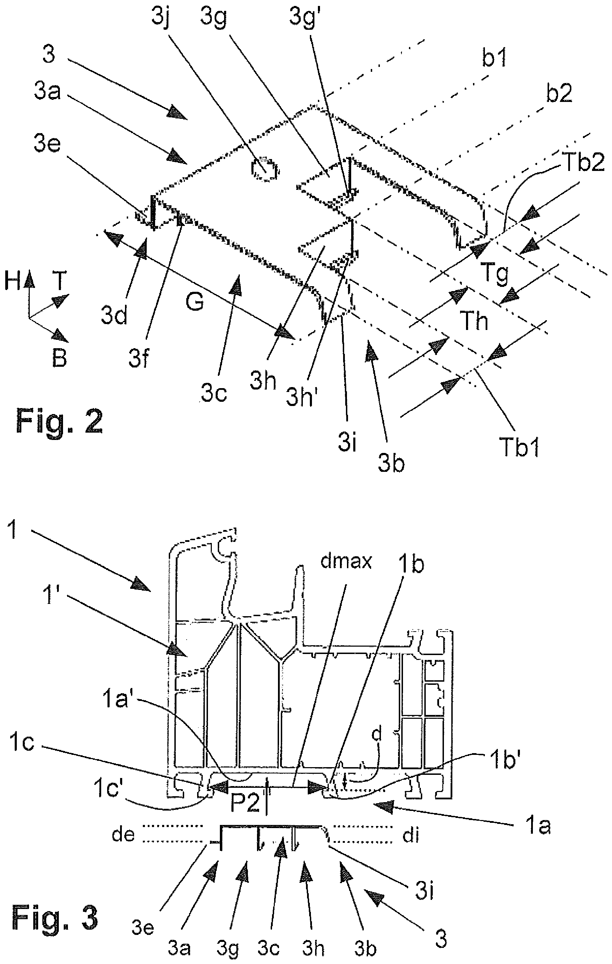

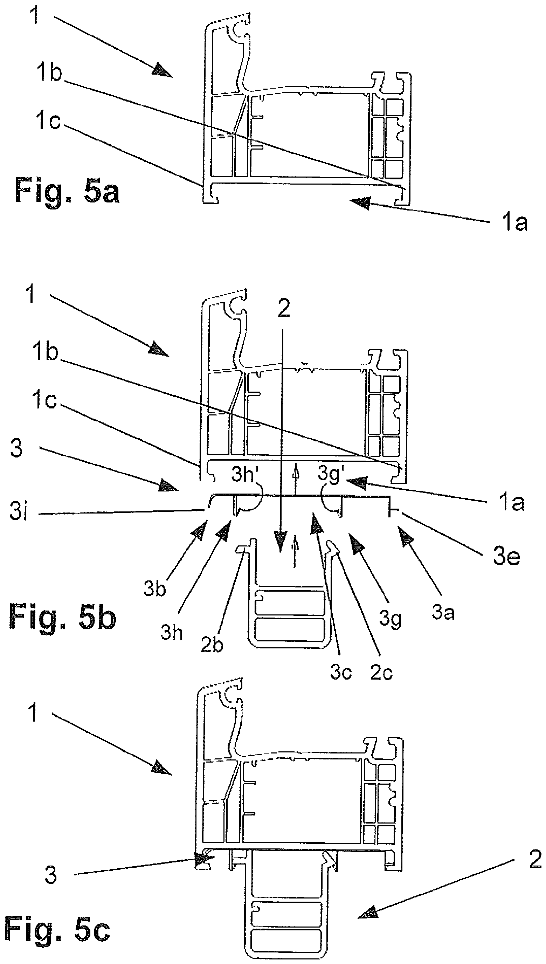

Figur 2 zeigt in perspektivischer Gesamtansicht eine Ausgestaltung des erfindungsgemäßen Verbindungselements, welches zum Verbinden zweier Profilteile verwendet werden kann, worauf weiter unten noch genauer eingegangen wird. Das Verbindungselement ist in Figur 2 und in den nachfolgenden Figuren in seiner Gesamtheit mit dem Bezugszeichen 3 bezeichnet. Das in Figur 2 angegebene "Koordinatensystem" symbolisiert die im Rahmen der vorliegenden Beschreibung verwendeten Richtungsangaben Höhe (H), Breite (B) und Tiefe (T). Das Verbindungselement 3 besitzt im Querschnitt, worauf ergänzend auch auf die Darstellungen in den Figuren 3 und 5b verwiesen wird, eine in etwa U-förmige Ausgestaltung mit wenigstens einem ersten freien Schenkel 3a, wenigstens einem zweiten freien Schenkel 3b und wenigstens einem mittleren Schenkel 3c, welcher den ersten freien Schenkel 3a mit dem zweiten freien Schenkel 3b verbindet. Der erste freie Schenkel 3a erstreckt sich im Wesentlichen unter einem rechten Winkel bezüglich des mittleren Schenkels 3c. In den beiden randständigen Tiefenbereichen, wovon in Figur 2 aufgrund der gewählten Darstellung nur der vordere erkennbar ist, weist der erste freie Schenkel 3a eine rechtwinklige Abwinkelung 3d auf, welche eine Haltestruktur 3e ausbildet, die sich zu der dem zweiten freien Schenkel 3b angewandten Seite des Verbindungselements 3 erstreckt. Die genannte Haltestruktur 3e dient zum Befestigen des Verbindungselements 3 an einem ersten Profilteil, worauf weiter unten noch genauer einzugehen ist. Wie bereits erwähnt wurde, findet sich eine entsprechende Abwinkelung 3d bzw. Haltestruktur 3e auch im gegenüberliegenden hinteren Tiefenbereich des Verbindungselements 3, was allein aus abbildungstechnischen Gründen nicht erkennbar ist. Bezugszeichen 3f bezeichnet das freie Ende des ersten freien Schenkels 3a.

Im Bereich des mittleren Schenkels 3c weist das Verbindungselement 3 an zwei unterschiedlichen Positionen b1, b2 entlang seiner Breitenerstreckung B Abwinkelungen auf, die sich im Wesentlichen parallel zu dem ersten freien Schenkel 3a erstrecken und entsprechende Rastvorsprünge 3g, 3h ausbilden. Die Rastvorsprünge 3g, 3h weisen an ihren freien Enden hakenartig gebogene Raststrukturen 3g' bzw. 3h' auf, welche in an sich bekannter Weise für ein Verrasten mit einem komplementären Rastvorsprung bzw. einer komplementären Raststruktur ausgebildet sind.

Aufgrund des Vorsehens der Abwinkelungen bzw. Rastvorsprünge 3g, 3h besteht der zweite freie Schenkel 3b des Verbindungselements 3 aus zwei zungenförmigen Vorsprüngen, die um die kombinierten Tiefenabmessungen der Abwinkelungen bzw. Rastvorsprünge 3g, 3h voneinander beabstandet sind. Dabei erstreckt sich der zweite freie Schenkel 3b (bzw. die genannten zungenartigen Vorsprünge) anders als der erste freie Schenkel 3a nicht unter einem rechten Winkel bezüglich des mittleren Schenkels 3c, sondern das Verbindungselement 3 weist im Übergangsbereich zwischen dem mittleren Schenkel 3c und dem zweiten Schenkel 3b einen im Querschnitt gekrümmten Verlauf auf, welcher einen leicht stumpfen Winkel ergibt, so dass sich der zweite freie Schenkel 3b zu der dem ersten freien Schenkel 3a abgewandten Seite des Verbindungselements 3 nach außen erstreckt. Diese Zusammenhänge sind insbesondere auch den Querschnittsansichten in Figur 3 und Figur 5b gut zu entnehmen.

Das freie Ende des zweiten freien Schenkels 3b ist mit Bezugszeichen 3i bezeichnet. Aus Gründen der Übersichtlichkeit wurde dies in Figur 2 nur für einen der genannten zungenförmigen Vorsprünge zeichnerisch dargestelit. Es befindet sich auf etwa derselben Höhe H wie die Haltestruktur 3e.

Im Bereich des mittleren Schenkels 3c weist das Verbindungselement 3 einen kreisförmigen Durchbruch 3j auf, welcher zum Durchführen eines (nicht gezeigten) Befestigungsmittels, beispielsweise einer Schraube ausgebildet ist, um das Verbindungselement 3 an einem Profilteil zu befestigen (optional).

Bezogen auf seine Erstreckung quer zu dem mittleren Schenkel 3c, d.h. in Höhenrichtung H weist der zweite freie Schenkel 3b ein Mindermaß gegenüber dem ersten freien Schenkel 3a auf, wie sich insbesondere aus den Querschnittsansichten in Figur 3 und Figur 5b gut entnehmen lässt. Mit anderen Worten: das freie Ende 3i des zweiten freien Schenkels 3b liegt bei Projektion auf die Höhe H näher an dem mittleren Schenkel 3c als das freie Ende 3f des ersten freien Schenkels 3a.

Wie sich der Figur 2 noch entnehmen lässt, ist das Maß der Erstreckung der einzelnen Bereiche des Verbindungselements 3 in Tiefenrichtung T unterschiedlich. Wie dargestellt, erstrecken sich die Abwinkelungen bzw. Rastvorsprünge 3g, 3h in Tiefenrichtung T ausgehend von einer gedachten mittleren Tiefe des Verbindungselements 3 etwa über jeweils ein Drittel der Gesamttiefe. Diese Tiefenabmessungen ist für die Abwinkelung 3g mit Bezugszeichen Tg und für Abwinkelung 3h mit Bezugszeichen Th bezeichnet. Die verbleibende Resttiefe des Verbindungselements 3 nehmen die beiden zungenartigen Vorsprünge des zweiten freien Schenkels 3b ein. Die entsprechenden Tiefenbereiche sind in Figur 2 mit Tb1 und Tb2 bezeichnet. Gemäß der Darstellung in Figur 2 betragen Tb1 und Tb2 jeweils etwa 1/6 der gesamten Tiefenerstreckung des Verbindungselements 3. Die Tiefenabmessung der Abwinkelung 3d bzw. des Haltevorsprungs 3e entspricht im Wesentlichen den angegebenen Maßen Tb1 bzw. Tb2.

Das Verbindungselement 3 ist vorzugsweise als Biege-/Stanzteil in einem metallischen Werkstoff oder als Gussteil in metallischen Werkstoff ausgebildet. Es liegt jedoch auch im Rahmen der vorliegenden Erfindung, das Verbindungselement 3 in Kunststoff auszubilden, beispielsweise als Spritzgussteil.

Das für die Herstellung des Verbindungselements 3 verwendete Material ist derart ausgewählt, dass bei einer Krafteinwirkung auf den zweiten freien Schenkel 3b bzw. dessen zungenartige Vorsprünge in Richtung auf den ersten freien Schenkel 3a (in Breitenrichtung B) eine elastische Rückstellkraft des zweiten freien Schenkels 3b bzw. der genannten zungenartigen Vorsprünge bewirkt ist. Auf diese Weise lässt sich das Verbindungselement 3 an ein Profilteil anklipsen und unter Vorspannung mit einem Profilteil verbinden, worauf nun anhand der folgenden Darstellungen genauer eingegangen wird.

Figur 3 zeigt ein erstes Profilteil in Form eines Rahmenprofils für ein Fenster oder eine Tür in Querschnittsdarstellung. Das erste Profilteil ist in Figur 3 analog zu den Figuren 1 a und 1 b mit dem Bezugszeichen 1 bezeichnet und als solches bekannt. Es weist an seiner unteren Verbindungsseite 1 a an seinem Profilgrundkörper 1' die bereits erwähnten Rastvorsprünge 1 b, 1 c auf, von denen in Figur 3 wiederum nur zwei explizit bezeichnet sind.

Die Rastvorsprünge 1 b, 1 c an dem ersten Profilteil 1 weisen einander zugewandte Raststrukturen 1b', 1c' auf, deren lichter Abstand d von der ansonsten im Wesentlichen ebenen Unterseite 1a' einerseits etwa dem Höhenabstand de der Haltestruktur 3e von dem mittleren Schenkel 3c des Verbindungselements 3 und andererseits etwa einem Höhenabstand di des freien Endes 3i des zweiten freien Schenkels 3b des Verbindungselements 3 von dem mittleren Schenkel 3c des Verbindungselements 3 entspricht (vgl. Figur 2). Aufgrund des leicht schrägen Verlaufs der Rastvorsprünge 1b, 1c existiert ein maximaler lichter Abstand dmax zwischen den Rastvorsprüngen 1 b, 1 c, welcher maximale lichte Abstand dmax etwas kleiner ist als die Gesamtabmessung G des Verbindungselements 3 in Breitenrichtung B.

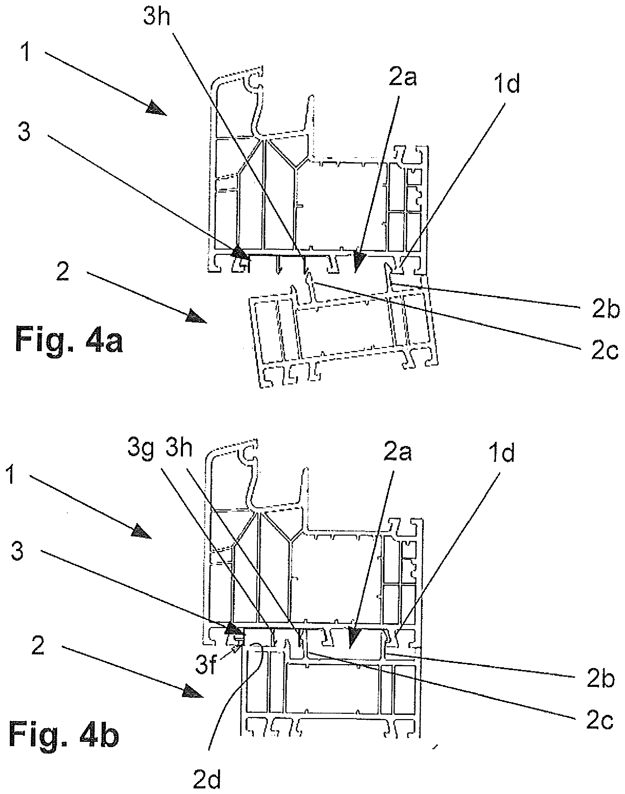

Das Verbindungselement 2 wird in Richtung des Pfeils P2 in den zwischen den Rastvorsprüngen 1 b, 1c definierten Freiraum eingesetzt. Dabei greift zunächst die Haltestruktur 3e formschlüssig in den Hinterschneidungsbereich des linken Rastvorsprungs 1 c des Profilteils 1 ein. Damit wird das Verbindungselement 3 in den genannten Freiraum eingeschwenkt, wobei zunächst die zungenartigen Vorsprünge des zweiten freien Schenkels 3b durch seitliches Einwirken des Rastvorsprungs 1b nach innen, das heißt in Richtung des ersten freien Schenkels 3a gedrückt und entsprechend verformt werden, bis sie aufgrund ihrer Elastizität im Hinterschneidungsbereich des Rastvorsprungs 1b formschlüssig eingreifen, um das Verbindungselement 3 mit seiner Haltestruktur 3e und dem freien Ende bzw. den feien Enden 3i des zweiten freien Schenkels 3b an den Raststrukturen 1 b, 1 c des Profilteils 1 zu verankern. Dieser Zustand ist in den Figuren 4a und 4b dargestellt.

Bei dem Profilteil 1 handelt es sich um ein herkömmliches Standard-Profilteil, wohingegen das Verbindungselement 3 mit seinen entsprechenden Abmessungen, insbesondere der Lage und des relativen Abstands der Haltestruktur 3e und des freien Endes 3i des zweiten freien Schenkels 3b speziell auf dieses Profilteil 1 abgestimmt ist, um die detailliert beschriebene Verankerung durchführen zu können. Anschließend kann über den Durchbruch 3j (Figur 2) eine weitergehende Fixierung des Verbindungselements 3 an dem Profilteil 1 erfolgen, was vorliegend nicht dargestellt ist.

Die Figuren 4a und 4b verdeutlichen, wie durch das Verbindungselement 3 an dem ersten Profilteil 1 die Möglichkeit für die Rastanbindung eines zweiten Profilteils 2 geschaffen ist, welches zweite Profilteil 2 der vorliegenden Beschreibung auch als Anbau- oder Adapterprofil bezeichnet ist.

Wie bereits in den Figuren 1 a und 1 b zum Stand der Technik dargestellt wurde, besitzt das zweite Profilteil 2 an seiner (oberen) Verbindungsseite 2a ebenfalls Rastvorsprünge 2b, 2c, welche jedoch gemäß den Figuren 4a und 4b und abweichend von den Figuren 1a und 1b nicht mit komplementären Rastvorsprüngen des ersten Profilteils 1 korrespondieren, so dass eine unmittelbare Rastverbindung von erstem Profilteil 1 und zweitem Profilteil 2 nicht möglich ist. Diese Problematik wird mittels des erfindungsgemäßen Verbindungselements 3 umgangen, wie die Figuren 4a und 4b zeigen.

Gemäß Figur 4a sind das erste Profilteil 1 und das zweite Profilteil 2 bzw. das Verbindungselement 3 derart ausgebildet, dass das zweite Profilteil 2 mit seinem Rastvorsprung 2b mit einem Rastvorsprung 1 d des ersten Profilteils 1 rastend zusammenwirkt. Gleichzeitig wirkt ein zweiter Rastvorsprung 2c des zweiten Profilteils 2 mit dem Rastvorsprung 3h des Verbindungselements 3 zusammen. Somit ist eine Rastverbindung zwischen dem ersten Profilteil 1 und dem zweiten Profilteil 2 möglich, obwohl das erste Profilteil 1 selbst im Bereich des Rastvorsprungs 2c des zweiten Profilteils 2 keinen korrespondierenden Rastvorsprung aufweist. Dieser wird erst durch das Verbindungselement 3 bereitgestellt.

Die Verbindung erfolgt nun derart, dass das zweite Profilteil 2 gemäß Figur 4a schräg an dem ersten Profilteil 1 angesetzt wird und dann durch Verschwenken in die in Figur 4b gezeigte Rastposition bewegt wird, wobei einerseits die Rastvorsprünge 1d und 2b und andererseits die Rastvorsprünge 2c und 3h miteinander verrasten. Im Bereich einer oberen Anlagefläche 2d des zweiten Profilteils 2 kommt es zudem zu einer abstützenden Anlage an dem zweiten Rastvorsprung 3g des Verbindungselements 3 sowie dem freien Ende 3f des ersten freien Schenkels 3a (vgl. Figur 2).

Gemäß Figur 4b ist eine erfindungsgemäße Verbindungsanordnung mit einem ersten Profilteil 1 und einem zweiten Profilteil 2 unter "Zwischenschaltung" eines erfindungsgemäßen Verbindungselements 3 geschaffen.

Figuren 5a bis 5c zeigen ein alternatives Ausführungsbeispiel zur Schaffung einer erfindungsgemäßen Verbindungsanordnung analog Figur 4b mit entsprechend angepasster Ausgestaltung sowohl des ersten Profilteils 1 und des zweiten Profilteils 2 als auch des Verbindungselements 3. Zur Vermeidung inhaltlicher Wiederholungen wird nachfolgend nur auf die wesentlichen neuen Aspekte dieser Ausführungsvariante näher eingegangen:

Figur 5a zeigt das erste Profilteil 1 welches wiederum als Rahmenprofil für ein Fenster oder eine Tür ausgestaltet ist. Abweichend von der Darstellung in Figur 1a, 1b bzw. den Figuren 3, 4a, 4b weist das erste Profilteil 1 an seiner (unteren) Verbindungseite 1 a genau zwei Rastvorsprünge 1 b, 1 c auf, die in endständigen Randbereichen des ersten Profilteils 1 angeordnet sind. Hieraus ergibt sich aufgrund der reduzierten Anzahl von Rastvorsprüngen gegenüber dem Stand der Technik eine deutliche Materialeinsparung.

Gemäß Figur 5b wird nun dieses erste Profilteil 1 wiederum mit einem erfindungsgemäßen Verbindungselement 3 versehen, welches grundsätzlich dieselbe Ausgestaltung aufweist, wie anhand von Figur 2 detailliert beschrieben. Abweichungen finden sich lediglich in Bezug auf die Lage und Orientierung der Abwinklungen bzw. Rastvorsprünge 3g, 3h. Letztere liegen gemäß Figur 5b weiter auseinander, als in Figur 2 dargestellt. Dies geht einher mit einer insgesamt (relativ) breiteren Ausgestaltung des Verbindungselements 3. Der Begriff "relativ" bezeichnet in diesem Zusammenhang, dass die Breitenerstreckung des Verbindungselements 3 vergrößert wurde, während zumindest die Höhenerstreckung des Verbindungselements 3 im Wesentlichen gleich geblieben ist (vgl. die Ausgestaltungen gemäß den Figuren 2 und 5b). Im Bereich der Abwinkelungen bzw. Rastvorsprünge 3g, 3h besteht ein weiterer Unterschied zur Ausgestaltung gemäß Figur 2 darin, dass deren hakenförmige Enden 3g', 3h' gemäß Figur 5b einander zugekehrt sind, während sie gemäß Figur 2 in dieselbe Richtung weisen.

Nachdem das Verbindungselement in bereits beschriebener Art und Weise mit dem ersten Profilteil 1 verbunden wurde, wird ein zweites Profilteil 2 mit Rastvorsprüngen 2b, 2c mit den Rastvorsprüngen 3g, 3h des Verbindungselements 3 verrastet. Hierbei umgreift das Verbindungselement 3 mit seinen Rastvorsprüngen 3g, 3h das zweite Profilteil 2 seitlich, wie insbesondere der Figur 5c zu entnehmen ist, welche die fertige Verbindungsanordnung aus erstem Profilteil 1, zweiten Profilteil 2 und Verbindungselement 3 zeigt.

Ein wesentlicher Unterschied zwischen den Ausgestaltungen gemäß Figur 5b, 5c einerseits und Figur 4a, 4b andererseits besteht darin, dass gemäß Figur 5b, 5c das zweite Profilteil 2 ausschließlich mit dem Verbindungselement 3 verrastet ist. Eine Rastverbindung mit dem ersten Profilteil 1 besteht dagegen nicht. Abweichend hiervon erfolgt gemäß den Figuren 4a und 4b die Verrastung des zweiten Profilteils 2 zum Teil direkt an dem ersten Profilteil 1 und nur zum Teil an dem Verbindungselement 3. Je nach zu verbindenden Profilteilen 1, 2 können also dort vorhandene, korrespondierende Rastvorsprünge genutzt werden. Falls keinerlei derartig korrespondierende Rastvorsprünge an den Profilteilen existieren, können diese durch Verwendung eines Verbindungselements anwendungsfallspezifisch geschaffen werden.

Selbstverständlich ist die vorliegende Erfindung nicht auf die vorstehend beschriebenen Ausführungsbeispiele beschränkt. So ist es in Abwandlung der Ausgestaltung in den Figuren 5b und 5c ohne weiteres möglich, die Rastvorsprünge 3g, 3h des Verbindungselements jeweils gerade umgekehrt zu orientieren, so dass es möglich ist, mit einem entsprechend ausgebildeten zweiten Profilteil die Rastvorsprünge des Verbindungselements seitlich zu umgreifen, falls dies beispielsweise aus ästethischen Gründen gewünscht ist. Die Ausgestaltung gemäß den Figuren 5b und 5c hat jedoch den Vorteil, dass sich durch seitliches Wegbiegen der Rastvorsprünge 3g, 3h das zweite Profilteil 2 leicht wieder von dem.ersten Profilteil 1 bzw dem Verbindungselement 3 entfernen lässt.

Wie der Fachmann leicht erkennt, ist es unter Zwischenschaltung eines erfindungsgemäßen Verbindungselements 3 möglich, erste und zweite Profilelemente miteinander zu verbinden, die an ihren jeweiligen Verbindungsseiten 1 a, 2a quasi beliebig ausgestaltet sein können. Dadurch wird die Flexibilität der Einsetzbarkeit vorhandener Profilteile stark verbessert, was insbesondere mit entsprechenden Kostenvorteilen verknüpft ist.

Wie der Fachmann außerdem erkennt, ist die vorliegende Erfindung keinesfalls auf den Bereich der Rahmenprofile für Fenster oder Türen beschränkt. Bei Verwendung entsprechend ausgebildeter erfindungsgemäßer Verbindungselemente lassen sich beliebige Profilteile miteinander verbinden.

## Patentansprüche

1. Verbindungselement (3) zum Verbinden eines ersten Profilteils (1), vorzugsweise eines Rahmenprofils für ein Fenster oder eine Tür, mit einem zweiten Profilteil (2), vorzugsweise einem Anbauprofil, welches erste Profilteil an einer Verbindungsseite (1 a) wenigstens zwei Rastvorsprünge (1 b, 1 c) mit Hinterschneidungen aufweist, wobei das Verbindungselement eine im Querschnitt im Wesentlichen U-förmige Ausgestaltung mit wenigstens einem ersten freien Schenkel (3a) und mit wenigstens einem zweiten freien Schenkel (3b) und mit einem den ersten Schenkel und den zweiten Schenkel verbindenden mittleren Schenkel (3c) aufweist, wobei der erste freie Schenkel (3a) sich im Wesentlichen senkrecht zu dem mittleren Schenkel (3c) erstreckt und in wenigstens einem ersten Tiefenabschnitt (Tb1, Tb2) eine zu der dem zweiten freien Schenkel (3b) abgewandten Seite hervorragende Haltestruktur (3e) aufweist, welche Haltestruktur (3e) sich vorzugsweise rechtwinklig zu dem ersten Schenkel (3a) erstreckt, **dadurch gekennzeichnet, dass** der zweite Schenkel (3b) unter einem leicht stumpfen Winkel bezüglich des mittleren Schenkels (3c) zu der dem ersten freien Schenkel (3a) abgewandten Seite abgebogen ist, vorzugsweise mit einer endlichen Krümmung im Abbiegebereich, wobei der zweite Schenkel (3b) dazu ausgebildet und vorgesehen ist, bei einem Eindrücken des Verbindungselements (3) in einen freien Bereich zwischen den Rastvorsprüngen (1 b, 1 c) des ersten Profilteils (1) eine Federwirkung auf die Rastvorsprünge (1 b, 1 c) zu bewirken, um das Verbindungselement (3) mittels der Haltestruktur (3e) und des zweiten freien Schenkels (3b) durch Einklipsen in die Hinterschneidungen an den Rastvorsprüngen (1 b, 1 c) des ersten Profilteils (1) zu befestigen, wobei im Bereich des mittleren Schenkels (3c) wenigstens ein sich im Wesentlichen parallel zu dem ersten (3a) und dem zweiten freien Schenkel (3b) erstreckender Rastvorsprung (3g, 3h) angeordnet ist, der für ein Verrasten mit einem komplementären Rastvorsprung (2b, 2c) des zweiten Profilteils (2) vorgesehen ist, um das erste Profilteil (1) und das zweite Profilteil (2) zu verbinden.

2. Verbindungselement (3) nach Anspruch 1,
**dadurch gekennzeichnet,**
**dass** eine Erstreckungskomponente des ersten freien Schenkels (3a) quer zu dem mittleren Schenkel (3c) gegenüber einer entsprechenden Erstreckungskomponente des zweiten freien Schenkels (3b) ein Übermaß aufweist.

3. Verbindungselement (3) nach Anspruch 1 oder 2,
**dadurch gekennzeichnet, dass**
die Haltestruktur (3e) durch Umbiegen des ersten freien Schenkels (3a) in dem ersten Tiefenabschnitt (Tb1, Tb2) hergestellt ist, wobei vorzugsweise die Haltestruktur (3e) etwa auf Höhe des freien Endes (3i) des zweiten freien Schenkels (3b) angeordnet ist, und/oder
dass der weigstens eine Rastvorsprung (3g, 3h) durch Umbiegen des mittleren Schenkels (3c) in einem zweiten Tiefenabschnitt (Th, Tg) hergestellt ist.

4. Verbindungselement (3) nach mindestens einem der Ansprüche 1 bis 3,
**gekennzeichnet durch**
eine Mehrzahl an Rastvorsprüngen (3g, 3h) an unterschiedlichen Positionen (b1, b2) zwischen dem ersten (3a) und dem zweiten freien Schenkel (3b), vorzugsweise in unterschiedlichen Tiefenabschnitten (Th, Tg) wobei höchst vorzugsweise an wenigstens zwei Rastvorsprüngen (3g, 3h) vorgesehene Raststrukturen (3g', 3h') einander zugewandt sind oder voneinander abgewandt sind oder in eine gleiche Richtung gewandt sind.

5. Verbindungselement (3) nach mindestens einem der Ansprüche 1 bis 3, **dadurch gekennzeichnet, dass**
eine Erstreckungskomponente des wenigstens einen Rastvorsprungs (3g, 3h) quer zu dem mittleren Schenkel (3c) im Wesentlichen der entsprechenden Erstreckungskomponente des ersten freien Schenkels (3a) entspricht.

6. Verbindungselement (3) nach mindestens einem der Ansprüche 1 bis 2, **dadurch gekennzeichnet, dass**
der wenigstens eine Rastvorsprung (3g, 3h) in einem zweiten, etwa mittleren Tiefenabschnitt (Tg, Th) angeordnet ist und/oder
dass der Tiefenabschnitt (Tb1, Tb2) der Haltestruktur (3e) randständig angeordnet ist,
wobei vorzugsweise der Rastvorsprung (3g, 3h) etwa 25 bis 40%, höchst vorzugsweise etwa 33%, der Gesamttiefe des Verbindungselements (3) ausmacht, und wobei vorzugsweise die Haltestruktur (3e) etwa 10 bis 25%, höchst vorzugsweise etwa 20%, der Gesamttiefe des Verbindungselements (3) ausmacht.

7. Verbindungselement (3) nach mindestens einem der Ansprüche 1 bis 6, welches in Metall ausgebildet ist, vorzugsweise als Stanz-/Biegeteil oder als Gussteil, höchst vorzugsweise Spritzgussteil, oder welches in Kunststoff ausgebildet ist, vorzugsweise als Gussteil, höchst vorzugsweise Spritzgussteil.

8. Verbindungselement (3) nach mindestens einem der Ansprüche 1 bis 7, **dadurch gekennzeichnet, dass** der zweite freie Schenkel (3b) elastischfedernd gegenüber einer Belastung in Richtung des ersten freien Schenkels (3a) ausgebildet ist.

9. Verbindungsanordnung mit einem ersten Profilteil (1), vorzugsweise Rahmenprofil für ein Fenster oder eine Tür, und mit einem zweiten Profilteil (2), vorzugsweise Anbauprofil, welches erste Profilteil (1) an einer Verbindungsseite (1 a) wenigstens zwei Rastvorsprünge (1 b, 1 c) aufweist,
**dadurch gekennzeichnet, dass**
an den Rastvorsprüngen (1 b, 1 c) ein Verbindungselement (3) gemäß einem der Ansprüche 1 bis 8 mit seiner Haltestruktur (3e) einerseits und mit seinem zweiten freien Schenkel (3b) andererseits befestigt ist, und
das zweite Profilteil (2) seinerseits an einer Verbindungsseite (2a) wenigstens zwei Rastvorsprünge (2b, 2c) aufweist, von welchen Rastvorsprüngen (2b, 2c) wenigstens einer mit dem wenigstens einen Rastvorsprung (3g, 3h) des Verbindungselements (3) rastend zusammenwirkt und von welchen Rastvorsprüngen (2b, 2c) der andere rastend mit einem weiteren Rastvorsprung (3g, 3h) des Verbindungselements (3) oder mit einem weiteren Rastvorsprung (1d) des ersten Profilteils (1) zusammenwirkt, um das erste Profilteil (1) über das Verbindungselement (3) mit dem zweiten Profilteil (2) zu verbinden.

10. Verbindungsanordnung nach Anspruch 9,
**dadurch gekennzeichnet, dass**
die Rastvorsprünge (1 b, 1 c) an dem ersten Profilteil (1) einander zugewandten Raststrukturen (1b', 1c') aufweisen, deren lichter Abstand (d) von einer im Wesentlichen ebenen Unterseite (1a') des ersten Profilteils (1) einerseits etwa einem Abstand (de) der Haltestruktur (3e) von dem mittleren Schenkel (3c) des Verbindungselements (3) und andererseits etwa einem Abstand (di) des freien Endes (3i) des zweiten freien Schenkels (3b) des Verbindungselements (3) von dem mittleren Schenkel (3c) des Verbindungselements (3) entspricht,
vorzugsweise dass ein maximaler lichter Abstand (dmax) zwischen den Rastvorsprüngen (1 b, 1 c) an dem ersten Profilteil (1) etwa einer Gesamtabmessung (G) des Verbindungselements (3) von einem freien Ende der Haltestruktur (3e) bis zu dem freien Ende (3i) des zweiten freien Schenkels (3b) entspricht,
höchst vorzugsweise dass der maximale lichte Abstand (dmax) etwas kleiner ist als diese Gesamtabmessung (G), um das Verbindungselement (3) mit Vorspannung an dem ersten Profilteil (1) zu fixieren.

11. Verbindungsanordnung nach Anspruch 9 oder 10,
**dadurch gekennzeichnet, dass**
eine maximale Erstreckung des Rastvorsprungs (3g, 3h) und/oder des ersten freien Schenkels (3a) des Verbindungselements (3) quer zu dem mittleren Schenkel (3c) etwa einer maximalen Vorkragung der Rastvorsprünge (1 b, 1 c) des ersten Profilteils (1) bezogen auf dessen Grundkörper (1') entspricht.

12. Verbindungsanordnung nach mindestens einem der Ansprüche 9 bis 11,
**dadurch gekennzeichnet, dass**
das zweite Profilteil (2) an seiner Verbindungsseite (2a) an dem freien Ende (3f) des ersten freien Schenkels (3a) anliegt.

13. Verbindungsanordnung nach mindestens einem der Ansprüche 9 bis 12,
**dadurch gekennzeichnet, dass**
das zweite Profilteil (2) mit seinen Rastvorsprüngen (2b, 2c) zwischen zwei Rastvorsprünge (3g, 3h) des Verbindungselements (3) greift, oder
dass das zweite Profilteil mit seinen Rastvorsprüngen zwei Rastvorsprünge des Verbindungselements umgreift.

14. Verfahren zum Verbinden eines ersten Profilteils (1), vorzugsweise Rahmenprofil für ein Fenster oder eine Tür, mit einem zweiten Profilteil (2), vorzugsweise Anbauprofil, welches erste Profilteil (1) an einer Verbindungsseite (1 a) wenigstens zwei Rastvorsprünge (1 b, 1 c) aufweist und welches zweite Profilteil (2) seinerseits an einer Verbindungsseite (2a) wenigstens zwei Rastvorsprünge (2b, 2c) aufweist, wobei vorzugsweise die Rastvorsprünge (1 b, 1 c) des ersten Profilteils (1) und die Rastvorsprünge (2b, 2c) des zweiten Profilteils (2) nicht vollständig paarweise korrespondierend ausgebildet sind, **dadurch gekennzeichnet, dass**
an den Rastvorsprüngen (1 b, 1 c) des ersten Profilteils ein Verbindungselement (3) gemäß einem der Ansprüche 1 bis 8 befestigt wird, höchst vorzugsweise mittels seiner Haltestruktur (3e) einerseits und seines zweiten freien Schenkels (3b) andererseits, und
dass das zweite Profilteil (2) mit wenigstens einem seiner Rastvorsprünge (2c) mit dem Verbindungselement (3) und mit seinem anderen Rastvorsprung (2b) mit dem Verbindungselements (3) oder mit einem Rastvorsprung (1d) des ersten Profilteils (1) verrastet wird, um das erste Profilteil (1) über das Verbindungselement (3) mit dem zweiten Profilteil (2) zu verbinden.

15. Verfahren nach Anspruch 14,
**dadurch gekennzeichnet, dass**
das Verbindungselement (3) unter Vorspannung zwischen zwei Rastvorsprüngen (1 b, 1 c) des ersten Profilteils (1) eingesetzt wird.

## Claims

1. Connecting element (3) for connecting a first profile part (1), preferably a frame profile for a window or a door, to a second profile part (2), preferably an add-on profile, which first profile part has on a connecting side (1 a) at least two locking projections (1 b, 1 c) having undercuts,
wherein the connecting element is of substantially U-shaped configuration in cross-section with at least one first free limb (3a) and with at least one second free limb (3b) and with a central limb (3c) which connects the first limb and the second limb,
wherein the first free limb (3a) extends substantially perpendicularly to the central limb (3c) and has in at least one first depth portion (Tb1, Tb2) a holding structure (3e) which protrudes to the side remote from the second free limb (3b), which holding structure (3e) preferably extends at a right-angle to the first limb (3a),
**characterised in that**
the second limb (3b) is bent at a slightly obtuse angle with respect to the central limb (3c) to the side remote from the first free limb (3a), preferably with a finite curvature in the bent region, the second limb (3b) being constructed and provided to bring about a resilient action on the locking projections (1 b, 1 c) when the connecting element (3) is pressed into a free region between the locking projections (1 b, 1 c) of the first profile part (1) in order to secure the connecting element (3) by means of the holding structure (3e) and the second free limb (3b) by snapping into the undercuts on the locking projections (1 b, 1 c) of the first profile part (1),
wherein in the region of the central limb (3c) there is arranged at least one locking projection (3g, 3h) which extends substantially parallel to the first free limb (3a) and the second free limb (3b) and which is provided for interengagement with a complementary locking projection (2b, 2c) of the second profile part (2) in order to connect the first profile part (1) and the second profile part (2).

2. Connecting element (3) according to claim 1,
**characterised in that**
an extension component of the first free limb (3a) transverse with respect to the central limb (3c) is oversized relative to a corresponding extension component of the second free limb (3b).

3. Connecting element (3) according to claim 1 or 2,
**characterised in that**
the holding structure (3e) has been produced by bending over the first free limb (3a) in the first depth portion (Tb1, Tb2), wherein preferably the holding structure (3e) is arranged at approximately the level of the free end (3i) of the second free limb (3b), and/or
the at least one locking projection (3g, 3h) has been produced by bending over the central limb (3c) in a second depth portion (Th, Tg).

4. Connecting element (3) according to at least one of claims 1 to 3,
**characterised by**
a plurality of locking projections (3g, 3h) at different positions (b1, b2) between the first free limb (3a) and the second free limb (3b), preferably in different depth portions (Th, Tg),
wherein most preferably locking structures (3g', 3h') provided on at least two locking projections (3g, 3h) face towards one another or face away from one another or face in the same direction.

5. Connecting element (3) according to at least one of claims 1 to 3,
**characterised in that**
an extension component of the at least one locking projection (3g, 3h) transverse with respect to the central limb (3c) substantially corresponds to the corresponding extension component of the first free limb (3a).

6. Connecting element (3) according to at least one of claims 1 and 2,
**characterised in that**
the at least one locking projection (3g, 3h) is arranged in a second, approximately central depth portion (Tg, Th), and/or
the depth portion (Tb1, Tb2) of the holding structure (3e) is arranged at an edge,
wherein preferably the locking projection (3g, 3h) constitutes approximately from 25 to 40 %, most preferably approximately 33 %, of the total depth of the connecting element (3), and wherein preferably the holding structure (3e) constitutes approximately from 10 to 25%, most preferably approximately 20 %, of the total depth of the connecting element (3).

7. Connecting element (3) according to at least one of claims 1 to 6, which is formed in metal, preferably in the form of a stamped/bent part or in the form of a moulded part, most preferably an injection-moulded part, or which is formed in plastics material, preferably in the form of a moulded part, most preferably an injection-moulded part.

8. Connecting element (3) according to at least one of claims 1 to 7,
**characterised in that** the second free limb (3b) is formed so as to be elastically resilient with respect to a load in the direction of the first free limb (3a).

9. Connecting arrangement having a first profile part (1), preferably a frame profile for a window or a door, and having a second profile part (2), preferably an add-on profile, which first profile part (1) has on a connecting side (1 a) at least two locking projections (1 b, 1 c),
**characterised in that**
a connecting element (3) according to any one of claims 1 to 8 is secured to the locking projections (1 b, 1 c) by means of its holding structure (3e) on the one hand and by means of its second free limb (3b) on the other hand, and
the second profile part (2) in turn has on a connecting side (2a) at least two locking projections (2b, 2c), at least one of which locking projections (2b, 2c) lockingly co-operates with the at least one locking projection (3g, 3h) of the connecting element (3) and the other of which locking projections (2b, 2c) lockingly co-operates with a further locking projection (3g, 3h) of the connecting element (3) or with a further locking projection (1 d) of the first profile part (1) in order to connect the first profile part (1) to the second profile part (2) by way of the connecting element (3).

10. Connecting arrangement according to claim 9,
**characterised in that**
the locking projections (1 b, 1 c) on the first profile part (1) have mutually facing locking structures (1 b', 1 c'), the clear distance (d) of which from a substantially flat underside (1 a') of the first profile part (1) corresponds, on the one hand, approximately to a distance (de) between the holding structure (3e) and the central limb (3c) of the connecting element (3) and, on the other hand, approximately to a distance (di) between the free end (3i) of the second free limb (3b) of the connecting element (3) and the central limb (3c) of the connecting element (3),
preferably a maximum clear distance (dmax) between the locking projections (1 b, 1 c) on the first profile part (1) corresponds approximately to an overall dimension (G) of the connecting element (3) from a free end of the holding structure (3e) to the free end (3i) of the second free limb (3b),
most preferably the maximum clear distance (dmax) is somewhat smaller than that overall dimension (G) in order to fix the connecting element (3) under bias to the first profile part (1).

11. Connecting arrangement according to claim 9 or 10,
**characterised in that**
a maximum extent of the locking projection (3g, 3h) and/or of the first free limb (3a) of the connecting element (3) transversely with respect to the central limb (3c) corresponds approximately to a maximum projection of the locking projections (1 b, 1 c) of the first profile part (1) relative to the base body (1') thereof.

12. Connecting arrangement according to at least one of claims 9 to 11,
**characterised in that**
the second profile part (2) rests by its connecting side (2a) against the free end (3f) of the first free limb (3a).

13. Connecting arrangement according to at least one of claims 9 to 12,
**characterised in that**
the second profile part (2) engages by means of its locking projections (2b, 2c) between two locking projections (3g, 3h) of the connecting element (3), or
the second profile part engages by means of its locking projections around two locking projections of the connecting element.

14. Method of connecting a first profile part (1), preferably a frame profile for a window or a door, to a second profile part (2), preferably an add-on profile, which first profile part (1) has on a connecting side (1 a) at least two locking projections (1 b, 1 c) and which second profile part (2) in turn has on a connecting side (2a) at least two locking projections (2b, 2c), wherein preferably the locking projections (1 b, 1 c) of the first profile part (1) and the locking projections (2b, 2c) of the second profile part (2) are not in the form of entirely complementary pairs,
**characterised in that**
a connecting element (3) according to any one of claims 1 to 8 is secured to the locking projections (1 b, 1 c) of the first profile part, most preferably by means of its holding structure (3e) on the one hand and its second free limb (3b) on the other hand, and
the second profile part (2) is brought into interengagement, by means of at least one of its locking projections (2c), with the connecting element (3) and, by means of its other locking projection (2b), with the connecting element (3) or with a locking projection (1 d) of the first profile part (1) in order to connect the first profile part (1) to the second profile part (2) by way of the connecting element (3).

15. Method according to claim 14,
**characterised in that**
the connecting element (3) is inserted under bias between two locking projections (1 b, 1 c) of the first profile part (1).

## Revendications

1. Elément de liaison (3) conçu pour relier une première partie profilée (1), de préférence un profilé d'encadrement dédié à une fenêtre ou à une porte, à une seconde partie profilée (2) se présentant, de préférence, comme un profilé rapporté, laquelle première partie profilée comporte, sur un côté de rattachement (1a), au moins deux protubérances d'encliquetage (1b, 1c) munies de contre-dépouilles,
ledit élément de liaison étant doté d'une configuration à section transversale substantiellement en U comprenant au moins une première branche libre (3a), au moins une seconde branche libre (3b), et une branche médiane (3c) solidarisant ladite première branche et ladite seconde branche,
sachant que ladite première branche libre (3a) s'étend, pour l'essentiel, perpendiculairement à ladite branche médiane (3c) et est munie, dans au moins une première zone de profondeur (Tb1, Tb2), d'une structure de retenue (3e) faisant saillie vers le côté tourné à l'opposé de la seconde branche libre (3b), laquelle structure de retenue (3e) s'étend préférentiellement à angle droit par rapport à ladite première branche (3a),
**caractérisé par le fait que**
la seconde branche (3b) est recourbée vers le côté tourné à l'opposé de la première branche libre (3a), en décrivant un angle légèrement obtus par rapport à la branche médiane (3c), de préférence avec une courbure d'extrémité dans la région du cintrage, ladite seconde branche (3b) étant réalisée et prévue pour exercer une action élastique sur les protubérances d'encliquetage (1b, 1c) lors d'un enfoncement de l'élément de liaison (3) dans une zone libre, entre lesdites protubérances d'encliquetage (1b, 1c) de la première partie profilée (1), de manière à fixer ledit élément de liaison (3) au moyen de la structure de retenue (3e) et de ladite seconde branche libre (3b), par crantage dans les contre-dépouilles ménagées sur lesdites protubérances d'encliquetage (1b, 1c) de ladite première partie profilée (1),
sachant qu'au moins une protubérance d'encliquetage (3g, 3h), située dans la région de ladite branche médiane (3c) et s'étendant pour l'essentiel parallèlement auxdites première (3a) et seconde (3b) branches libres, est prévue pour un encliquetage avec une protubérance complémentaire d'encliquetage (2b, 2c) de la seconde partie profilée (2), de manière à relier ladite première partie profilée (1) et ladite seconde partie profilée (2).

2. Elément de liaison (3) selon la revendication 1,
**caractérisé par le fait**
**qu'**une composante de l'étendue de la première branche libre (3a), transversalement vis-à-vis de la branche médiane (3c), présente un surdimensionnement par rapport à une composante correspondante de l'étendue de la seconde branche libre (3b).

3. Elément de liaison (3) selon la revendication 1 ou 2,
**caractérisé par le fait que**
la structure de retenue (3e) est produite par cintrage de la première branche libre (3a) dans la première zone de profondeur (Tb1, Tb2), ladite structure de retenue (3e) étant située, de préférence, sensiblement à la hauteur de l'extrémité libre (3i) de la seconde branche libre (3b) ; et/ou
que la protubérance d'encliquetage (3g, 3h), à présence minimale, est produite par cintrage de la branche médiane (3c) dans une seconde zone de profondeur (Th, Tg).

4. Elément de liaison (3) selon au moins l'une des revendications 1 à 3,
**caractérisé par**
une pluralité de protubérances d'encliquetage (3g, 3h) en différents emplacements (b1, b2) entre les première (3a) et seconde (3b) branches libres, de préférence dans différentes zones de profondeur (Th, Tg), sachant que
des structures encliquetables (3g', 3h'), prévues sur au moins deux protubérances d'encliquetage (3g, 3h) avec préférence maximale, se font mutuellement face ou sont tournées mutuellement à l'opposé, ou bien pointent dans une même direction.

5. Elément de liaison (3) selon au moins l'une des revendications 1 à 3,
**caractérisé par le fait**
**qu'**une composante de l'étendue de la protubérance d'encliquetage (3g, 3h) à présence minimale, transversalement vis-à-vis de la branche médiane (3c), concorde pour l'essentiel avec la composante correspondante de l'étendue de la première branche libre (3a).

6. Elément de liaison (3) selon au moins l'une des revendications 1 à 2,
**caractérisé par le fait que**
la protubérance d'encliquetage (3g, 3h), à présence minimale, est disposée dans une seconde zone de profondeur (Th, Tg) sensiblement centrale ; et/ou que la zone de profondeur (Tb1, Tb2) de la structure de retenue (3e) occupe une position marginale,
sachant que, de préférence, ladite protubérance d'encliquetage (3g, 3h) représente environ de 25 à 40 %, avec préférence maximale environ 33 % de la profondeur totale de l'élément de liaison (3), ladite structure de retenue (3e) représentant préférentiellement environ de 10 à 25 %, avec préférence maximale environ 20 % de ladite profondeur totale dudit élément de liaison (3).

7. Elément de liaison (3) selon au moins l'une des revendications 1 à 6, réalisé en métal, de préférence en tant que pièce produite par découpage/pliage ou en tant que pièce moulée, avec préférence maximale en tant que pièce moulée par injection ; ou réalisé en matière plastique, de préférence en tant que pièce moulée, avec préférence maximale en tant que pièce moulée par injection.

8. Elément de liaison (3) selon au moins l'une des revendications 1 à 7,
**caractérisé par le fait que**
la seconde branche libre (3b) est de réalisation douée d'élasticité par rapport à une contrainte s'exerçant dans la direction de la première branche libre (3 a).

9. Dispositif de liaison comprenant une première partie profilée (1), de préférence un profilé d'encadrement dédié à une fenêtre ou à une porte, et une seconde partie profilée (2) se présentant, de préférence, comme un profilé rapporté, laquelle première partie profilée (1) comporte au moins deux protubérances d'encliquetage (1b, 1c) sur un côté de rattachement (1a),
**caractérisé par le fait**
**qu'**un élément de liaison (3), conforme à l'une des revendications 1 à 8, est fixé aux protubérances d'encliquetage (1b, 1c) par sa structure de retenue (3e), d'une part, et par sa seconde branche libre (3b) d'autre part, et
la seconde partie profilée (2) est pourvue, quant à elle, d'au moins deux protubérances d'encliquetage (2b, 2c) sur un côté de rattachement (2a), protubérances d'encliquetage (2b, 2c) dont au moins l'une coopère par déclic avec la protubérance d'encliquetage (3g, 3h), à présence minimale sur l'élément de liaison (3), et protubérances d'encliquetage (2b, 2c) dont l'autre coopère, par déclic, avec une protubérance supplémentaire d'encliquetage (3g, 3h) dudit élément de liaison (3) ou avec une protubérance supplémentaire d'encliquetage (1d) de la première partie profilée (1), de manière à relier ladite première partie profilée (1) à ladite seconde partie profilée (2) par l'intermédiaire dudit élément de liaison (3).

10. Dispositif de liaison selon la revendication 9,
**caractérisé par le fait que**
les protubérances d'encliquetage (1b, 1c), situées sur la première partie profilée (1), sont dotées de structures encliquetables (1b', 1c') qui se font mutuellement face et dont l'espacement intérieur (d) correspond sensiblement, à partir d'une face inférieure (1a') substantiellement plane de ladite première partie profilée (1), d'une part à une distance (de) séparant la structure de retenue (3e) d'avec la branche médiane (3c) de l'élément de liaison (3) et, d'autre part, à une distance (di) comprise entre l'extrémité libre (3i) de la seconde branche libre (3b) dudit élément de liaison (3) et ladite branche médiane (3c) dudit élément de liaison (3) ;
de préférence, qu'un espacement intérieur maximal (dmax), entre lesdites protubérances d'encliquetage (1b, 1c) situées sur ladite première partie profilée (1), correspond sensiblement à un dimensionnement global (G) dudit élément de liaison (3), depuis une extrémité libre de ladite structure de retenue (3e) jusqu'à ladite extrémité libre (3i) de ladite seconde branche libre (3b) ;
avec préférence maximale, que ledit espacement intérieur maximal (dmax) est sensiblement plus petit que ce dimensionnement global (G), de manière à bloquer ledit élément de liaison (3) à demeure, avec précontrainte, sur ladite première partie profilée (1).

11. Dispositif de liaison selon la revendication 9 ou 10,
**caractérisé par le fait**
**qu'**une étendue maximale de la protubérance d'encliquetage (3g, 3h) et/ou de la première branche libre (3a) de l'élément de liaison (3), transversalement vis-à-vis de la branche médiane (3c), correspond sensiblement à un débord maximal des protubérances d'encliquetage (1b, 1c) de la première partie profilée (1) par rapport au corps de base (1') de cette dernière.

12. Dispositif de liaison selon au moins l'une des revendications 9 à 11,
**caractérisé par le fait que**
la seconde partie profilée (2) est en applique, par son côté de rattachement (2a), contre l'extrémité libre (3f) de la première branche libre (3a).

13. Dispositif de liaison selon au moins l'une des revendications 9 à 12,
**caractérisé par le fait que**
la seconde partie profilée (2) s'engage, par ses protubérances d'encliquetage (2b, 2c), entre deux protubérances d'encliquetage (3g, 3h) de l'élément de liaison (3) ; ou
que ladite seconde partie profilée ceinture, par ses protubérances d'encliquetage, deux protubérances d'encliquetage dudit élément de liaison.

14. Procédé dévolu à la liaison d'une première partie profilée (1), de préférence un profilé d'encadrement dédié à une fenêtre ou à une porte, avec une seconde partie profilée (2) se présentant, de préférence, comme un profilé rapporté, ladite première partie profilée (1) comportant au moins deux protubérances d'encliquetage (1b, 1c) sur un côté de rattachement (1a), et ladite seconde partie profilée (2) étant pourvue, quant à elle, d'au moins deux protubérances d'encliquetage (2b, 2c) sur un côté de rattachement (2a), sachant que, de préférence, lesdites protubérances d'encliquetage (1b, 1c) de ladite première partie profilée (1) et lesdites protubérances d'encliquetage (2b, 2c) de ladite seconde partie profilée (2) ne sont pas réalisées avec concordance intégrale par paires,
**caractérisé par le fait**
**qu'**un élément de liaison (3), conforme à l'une des revendications 1 à 8, est fixé aux protubérances d'encliquetage (1b, 1c) de la première partie profilée, avec préférence maximale au moyen de sa structure de retenue (3e), d'une part, et de sa seconde branche libre (3b) d'autre part ; et
**que** la seconde partie profilée (2) est encliquetée avec l'élément de liaison (3) par au moins l'une (2c) de ses protubérances d'encliquetage et, par son autre protubérance d'encliquetage (2b), avec ledit élément de liaison (3) ou avec une protubérance d'encliquetage (1d) de ladite première partie profilée (1), de manière à relier ladite première partie profilée (1) à ladite seconde partie profilée (2) par l'intermédiaire dudit élément de liaison (3).

15. Procédé selon la revendication 14,
**caractérisé par le fait que**
l'élément de liaison (3) est inséré, avec précontrainte, entre deux protubérances d'encliquetage (1b, 1c) de la première partie profilée (1).
